# EUROPEAN PATENT APPLICATION

(11) **EP 3 907 189 A1**
(43) Date of publication of application: **10.11.2021**
(21) Application number: 20173754.1
(22) Date of filing: 08.05.2020
(51) Int. Cl.: C02F 1/00, C02F 1/28, C02F 1/50, B01D 24/12, B01D 24/42, B01D 35/027, B01D 35/153

(54) **FILTRATION DEVICE FOR LIQUIDS**

(71) Applicant: Brita GmbH, 65232 Taunusstein (DE)
(72) Inventor: BUNNEMANN, Phillip, 65599 Dornburg (DE)

(57) **Abstract**

A filtration device (1) for liquids comprises a container body (2) with a storage area (3) for holding the liquid (4) to be filtered by the filtration device (1), whereby the container body (2) comprises an outlet (15) that is connected to the storage area (3) via an extraction conduit (13) for extracting the liquid (4) from the storage area (3) through the extraction conduit (13) and out of the outlet (15). The extraction conduit (13) comprises a riser pipe (14) with an input end (17) connected to an output opening of the storage area (3) located at a bottom part of the container body (2) and with an output end (18) located above a maximum filling level of the liquid (4) within the storage area (3) and connected to the outlet (15). The container body (2) comprises a seating (11) for removably mounting the filter element (10) to the container body (2). The storage area (3), the riser pipe (14) and the outlet (15) are integral parts of the one-piece container body (2).

## Description

### Technical Field

The invention relates to a filtration device for liquids comprising a container body with a storage area for holding the liquid to be filtered by the filtration device, whereby the container body comprises an inlet for filling the liquid into the storage area within the container body and an outlet that is connected to the storage area via an extraction conduit for extracting the liquid from the storage area through the extraction conduit and out of the outlet, whereby the extraction conduit comprises a riser pipe with an input end connected to an output opening of the storage area located at a bottom part of the container body and with an output end located above a maximum filling level of the liquid within the storage area and connected to the outlet, whereby the filtration device further comprising a filter element that is arranged inside the container body such that the liquid that is extracted from the container body must pass the filter element before flowing out of the outlet, and further comprising a pressure generating device for generating pressure within the container body causing the liquid to pass out of the container body by flowing from the storage area through the extraction conduit and out of the outlet.

### Background of the invention

For many applications there is a need for a filtration device that enables the filtering of liquids. Even though the filtration device disclosed below is suitable for many different applications, the invention is described using the example of a water filter without limiting the invention to a water filtration device.

Usually, such filtration devices comprise a container body with a storage area for collecting and holding the liquid, e.g. water, until there is a need for extracting a quantity of the liquid from the filtration device. The container body comprises an inlet which allows for filling the liquid into the storage area within the container body. The inlet can be closed liquid-tight with a lid in order to prevent any unwanted contamination of the liquid inside the storage area from the outside. The container body further comprises an outlet which allows for removal of the liquid after the filtration process.

A suitable filter element is arranged in the flow path between the inlet and the outlet of the container body. For some filtration devices the filter element is located inside of the storage area and connected to the inlet or outlet of the filtration device. Some other filtration devices comprise a filter element that is located outside of the storage area and connected with the storage area by means of a conduit. The filter element may be arranged between the inlet and the storage device or between the storage device and the outlet.

Many different filter elements are known in prior art, comprising different types of filter media usually disposed in the flow path through the filter element. The filter media may comprise activated carbon, zinc or copper, or similar materials that improve e.g. the quality of drinking water. The filter element may also comprise membranes or porous materials that remove particles with a particles size that is larger than the pore size of the membrane or porous material that is arranged within the flow path.

For some filtration devices, the container body is a bottle with an opening that is used for filling water into the bottle as well as for extracting filtered water from the bottle. The opening is usually closed with a cap, whereby a filtering element is mounted at the cap and covers a spout in the cap, through which the filtered water can be extracted from the bottle. Such bottles can easily be carried by a user and used when needed. Sometimes, the cap comprises a spout or an outlet at which a user can suck filtered water from the bottle.

In order to facilitate the extraction of filtered water from the bottle, some bottles comprise an air pump that in many cases is also mounted to the cap. By manually or automatically operating the air pump a pressure increase inside of the bottle can be generated, resulting in a flow of a corresponding amount of water from the inside of the bottle through the filter element and through the spout or outlet towards outside of the bottle. Such filtration devices are disclosed e.g. in US 2013/0048578 A1 or in US 2019/0194032 A1. However, a cap that contains the inlet and outlet, and that contains or supports the filter element and the air pump is expensive to manufacture and difficult to clean.

Some other filtration devices comprise a container body that is intended for stationary use. The volume of the storage area inside such a container body may be adapted for personal or household use and allow for holding e.g. one or several liters. Such a filtration device is disclosed e.g. in WO 2010/091467 A1. A filter element is located at an outlet of a cube-shaped vessel. By applying pressure within the vessel, the liquid stored inside the vessel will be caused to flow through the filter element and pass out of the vessel via the outlet. The outlet may be located on top of the vessel, and the filter element can be mounted at the outlet. It is also possible to located the outlet of the vessel at the bottom, and to provide for an external conduit, namely a riser pipe, that extends upwards and leads to an outlet of the conduit above the top of the vessel. The filter element can be a part of this conduit or can be inserted into this conduit, allowing for positioning the filter element outside of the vessel. However, repeated cleaning of the vessel after intervals of use is laborious, as not all areas of the vessel are easily accessible.

A filtration device with a cylindrical-shaped or oval-shaped storage area that is easily accessible via a large opening at the top of the container body is disclosed in WO 2016/100880 A1. For some of the disclosed embodiments, a conduit is an integral part of the filter element and is used or exchanged together with the filter element. It is also described to make use of a conduit that is designed like a riser pipe and attached to the container body. The riser pipe leads from an opening at the bottom of the container body towards a spout located above the fill line of the storage area inside the container body. As with the filtration device discussed above, handling and cleaning of such a filtration device is laborious.

Thus, there is a need for a filtration device which facilitates handling and cleaning. The objective of the present invention was to provide for a filtration device, which can be easily cleaned without need for manually cleaning angled areas or areas that are difficult to access.

### Summary of the invention

The present invention relates to a filtration device with a container body with the features mentioned at the beginning, whereby the container body comprises a seating for removably mounting the filter element to the container body, and whereby the storage area, the riser pipe and the outlet are integral parts of the one-piece container body. As all liquid-contacting parts except of the filter element, namely the storage area, the riser pipe and the outlet are manufactured as a one-piece container body, there is no need to dismantle these parts before cleaning. Furthermore, there are no joints where impurities or deposits from the liquid can accumulate and stick, which then have to be cleaned with considerable effort. The design and shape of the one-piece container body may be adapted to allow for easy access of all areas inside of the one-piece container body which further facilitates the cleaning of all parts of the filtration device that will be in contact with the liquid during the intended use of the filtration device.

According to an advantageous aspect of the invention, the inlet of the container body is arranged above the filling level of the storage area and has a cross-sectional area which corresponds to the cross-sectional area of the storage area, so that the storage area is accessible without undercuts via the inlet. A large opening of the container body provides for easy access of the inside of the container body.

In accordance with an embodiment of the invention, the seating for the filter element is only accessible from the storage area. The seating for the filter element may be located at the bottom of the storage area. The seating is preferably designed and arranged in a manner as to allow for an easy mounting of the filter element in a position that fully covers the output opening of the storage area. Thus, the flow path of liquid that is extracted from the storage area must traverse the filter element before entering the extraction conduit with the riser pipe. The cross-section of the storage area is preferably large enough to allow for a person to mount or dismount the filter element inside the storage area by hand and without the need for tools.

In yet an alternative embodiment that is also considered advantageous, the seating for the filter element is accessible from outside of the container body via a filter opening in the container body, whereby the filter opening is sealed liquid-tight with a removable filter opening lid, allowing the mounting or removal of the filter element through the filter opening. The filter opening is preferably located close by the seating, allowing easy access to the seating from the outside of the container body, which facilitates the mounting and dismounting of the filter element in the seating. The filter opening can also be arranged close to the output opening of the storage area and thus close to the input end of the riser pipe, which facilitates access to this end of the riser pipe for cleaning purposes.

The filter element may have a screw thread so that the filter element can be screwed into the seating. It is also possible to engage the filter element with the seating using a bayonet lock or a snap-in connection. In its position inserted into the seating, the filter element can be sealed against the seating with an additional sealing element.

In order to reduce the handling effort required to replace a used-up filter element, it is optionally possible that the filter element is mounted to the filter opening lid. The filter opening lid may also be an integral part of a one-piece housing of the filter media of the filter element. The seating of the filter element can be used simultaneously as seating for the filter opening lid. An exchange and replacement of the filter element only requires the dismounting of the filter opening lid from outside of the container body, the removal of the filter element together with the filter opening lid, and subsequent remounting a new filter element until the filter opening lid closes the filter opening in a liquid-tight manner. The design of the seating may be adapted for e.g. a bayonet lock or a screw cap. The combined filter element and filter opening lid may comprise sealing components like e.g. sealing rings which simultaneously serve to seal the filter opening of the container body as well as the filter element against the seating and thus the flow path of the liquid through the filter element.

In accordance with a particularly advantageous embodiment of the invention, the output end of the riser pipe is connected via a duct to the laterally spaced outlet, whereby the duct is a gutter that is open at the top. Thus, the riser pipe as well as the duct and the laterally spaced outlet are open at the top, allowing for easy access to all volumes and areas inside of the one-piece container body. If the container body is placed upside down on the top of the container body, any liquid that is previously inside the container body will completely flow out of the container body. Thus, if the container body is cleaned by using a cleaning liquid like, e.g. water with cleaning agents followed by clean water, after placing the container body upside down all remaining water will flow out of the container body and there is no need for manually drying or wiping out the inside of the container body.

The top side of the open duct can optionally be covered by a duct cover that can be fixed on the duct and retained in that position by frictional force or positive locking of the duct cover. The duct cover prevents any unwanted contamination by particles or dust of the riser pipe that runs into the duct. The duct cover can be made of some elastomeric synthetic material that allows the clipping on of the duct cover on top of the duct. Alternatively, the duct cover can be made e.g. of a rigid plastic material or of stainless steel, which allows for a snap-in connection on top of the open duct. It is also possible to combine the duct cover with a lid that covers the inlet of the container body that is next to the duct. By making the duct cover an integral part of a one-piece top lid that covers simultaneously the inlet of the storage area of the container body as well as the open duct, the number of different parts that must be disassembled for cleaning the filter device and that must be reassembled after a cleaning process can be reduced. The duct cover that is removably attachable to the top of the duct combines protection of the filtered liquid against contamination and unwanted exposure to dust etc. with considerable facilitation of cleaning the duct.

According to another aspect of the invention the outlet comprises a downward pointing spout. A downward pointing spout facilitates the targeted removal of the filtered liquid. In addition, an aerator or a swiveling nozzle, for example, can be attached to the downward-facing spout to make it as convenient as possible to remove the filtered liquid. It is also possible that a further mechanical filter, for example a filter membrane, can be detachably attached to the downward pointing spout.

In order to further facilitate the cleaning of the filtration device, the container body may optionally be made of a dishwasher suitable material, preferably a dishwasher safe material. Thus, the container body can be put into a dishwasher for cleaning the container body. By placing the container body upside down without any lids and duct cover inside a dishwasher, the dishwasher can perform a full cleaning of the container body, usually without need for any additional manual cleaning or further manual processing as e.g. drying or wiping of regions inside of the container body that are difficult to access. Furthermore, the one-piece container body does not require any disassembling of parts before putting the container body inside a dishwasher. In addition, no interstices or joints are required for the container body that might allow for unwanted accumulation and retention of contamination, which might require additional manual handling and cleaning procedures.

According to an advantageous aspect of the invention the filtration device comprises a base part to accommodate the container body, whereby the pressure generating device is arranged inside of the base part and pressure-transmitting connected to the storage area if the container body is accommodated on the base part. The pressure generating device might comprise an electrically operated air pump with a connecting air tube that leads into the storage area inside the container body. The air pump, the required electrical parts and the energy supply can be arranged inside the base part. The electrical energy can be provided by batteries or via an electrically conductive connection to the household energy supply. It is also possible to provide for a manually operated air pump that can be arranged within the base part. In yet another embodiment, it is also possible to arrange the air pump inside a lid that covers the storage area of the container body. Thus, there is no need for a connecting air tube that connects the air pump with the storage area inside the container body.

In case that the filtration device comprises such a connecting air tube, it may be advantageous that the pressure generating device is separated by a check valve from the storage area inside the container body. The check valve can be arranged either inside the container body or as part of the base part or of the connecting air tube. The check valve may have a valve ball which is lifted from the valve seat by the overpressure generated by the air pump and releases the air tube as long as the overpressure is maintained.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 illustrates a cross-sectional view of a first embodiment of a filtration device with a one-piece container body and a filter element that is accessible from inside the container body,
Figure 2 illustrates a cross-sectional view of a lower part of another embodiment of the filtration device with the filter element that is accessible from outside the container body, and
Figure 3 illustrates an exploded perspective view of yet another embodiment of the filtration device with the container body accommodated on top of a base part.

### Detailed description of the invention

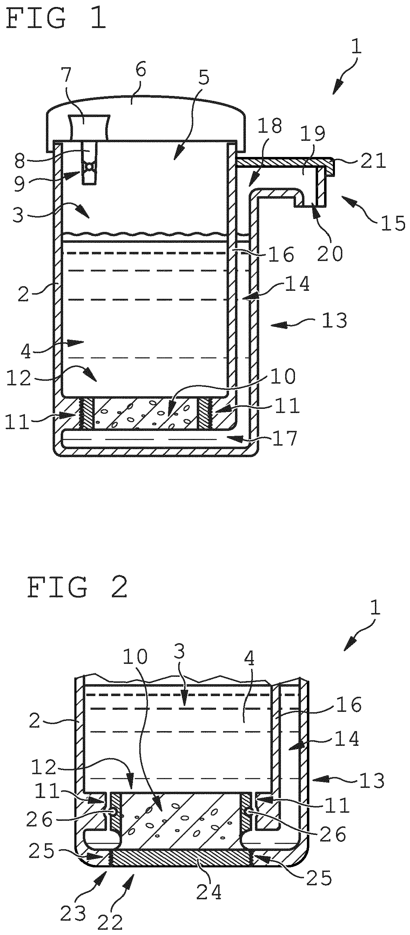

By way of example, figure 1 illustrates a filtration device 1 according to an embodiment of invention. The filtration device 1 comprises a container body 2 with a storage area 3 for holding a liquid 4 to be filtered by the filtration device 1. The container body 2 comprises an inlet 5 for filling the liquid into the storage area 3 within the container body 2. The inlet 5 is a large opening on top of the container body 2, whereby the inlet 5 has a cross-sectional area that corresponds to the cross-sectional area of the storage area 3. Thus, the storage area 3 is accessible from the top side of the container body 2 via the inlet 5 without any undercuts or edges, which facilitates access to the storage area 3 inside the container body 2.

A lid 6 can be removably attached over the inlet 5 to the container body 2. The lid 6 can be mounted pressure-tight onto the container body 2. The lid 6 may comprise a pressure generating device 7 that is only hinted at in figure 1. The pressure generating device 7 can be operated manually or automatically, e.g. by an electric pump. By operating the pressure generating device 7, air is pumped into the storage area 3 via an air tube 8 with a check valve 9.

A filter element 10 is located in a seating 11 with a thread at a bottom 12 of the storage area 3 inside the container body 2. The filter element 10 could also be mounted into the seating 11 by a bayonet lock or by a snap-in connection. An extraction conduit 13 connects the storage area 3 via the filter element 10 through a riser pipe 14 with an outlet 15 for discharging the liquid 4 from the storage area 3 inside the container body 2. The riser pipe 14 is arranged along an outside wall 16 of the storage area 3 of the container body 2. The riser pipe 14 extends from the bottom 12 of the storage area 3 to the outlet 15 close to the top of the container body 2 next to the inlet 5 with the lid 6. An input end 17 of the riser pipe 14 is next to the filter element 10. An output end 18 of the riser pipe 14 is connected via a horizontal duct 19 with the outlet 15 with a downward pointing spout 20.

The duct 19 is designed as a gutter that is open at the top. The gutter leads to the outlet 15 that is also open at the top. A duct cover 21 can be mounted on top of the duct 19 in order to protect the open gutter from any unwanted contamination e.g. by particles or dust that may fall into the gutter. The duct cover 21 is made of an elastomeric synthetic material that allows for releasably mounting the duct cover 21 onto the duct 19 by clipping on, plugging on or pushing the duct cover 21 onto the duct 19. It is also possible to make use of a duct cover 21 that is made of a rigid plastic material or of a suitable metal, e.g. a sheet material or stainless steel.

The storage area 3, the seating 11 for the filter element 10, the extraction conduit 13 comprising the riser pipe 14 and the outlet 15 are integral parts of the one-piece container body 2. Thus, with the exception of the replaceable filter element 10, all components that are in contact with the liquid 4 are manufactured one-piece and without the need for any joints or gaps between individual parts, which must be manufactured separately and then assembled to form the filtration device 1.

After removal of the lid 6, the storage area 3 of the container body 2 can be filled with the liquid 4 to be filtered by the filtration device 1. After filling the storage area 3 with the liquid 4, the lid 6 can be mounted pressure-tight on top of the container body 2. Afterwards, if the pressure generating device 7 is operated, either manually or by means of an electric pump, the pressure inside the storage area 3 rises and a corresponding portion of the liquid 4 is forced through the filter element 10 that is arranged at the bottom 12 of the storage area 3, resulting in performing a filtration process and providing a portion of filtered liquid 4 that is discharged through the extraction conduit and the outlet 15 from the container body 2. By operating the pressure generating device 7, the filtered liquid 4 rises through the riser pipe 14 and then flows through the horizontally running duct 19 and out of the downward directed outlet spout 20 of the outlet 15.

In order to perform a cleaning of the filtration device 1, the lid 6 can be removed from the container body 2 and the duct cover 21 can be removed from the duct 19. Afterwards, the filter element 10 is easily accessible from the inlet 5 and can be manually removed from the seating 11 by performing a rotational movement of the filter element 10, causing the filter element 10 to rotate out of the seating 11. After removing the filter element 10 from the bottom 12 of the storage area 3, the remaining one-piece container body 2 can be easily cleaned e.g. by placing the container body 2 upside down into a dishwasher. All areas inside of the container body 2, including the riser pipe 14 and the duct 19, are easily accessible from the top side of the container body 2.

Figure 2 illustrates another embodiment of the container body 2, whereby only a lower region of the container body 2 is shown. The filter element 10 is mounted into a seating 11 that is accessible via a filter opening 22 at a bottom 23 of the container body 2. Before filling the liquid 4 into the storage area 3, the filter opening 22 can be closed liquid-tight with a filter opening lid 24 that can be screwed into a thread 25 on the edge of the filter opening 22. The filter element 10 is attached on top of the filter opening lid 24. By mounting the filter opening lid 24 into the filter opening 22, the filter element 10 is located within the seating 11 for the filter element 10 at the bottom 12 of the storage area 3. A gap between the filter element 10 and the seating 11 is sealed liquid-tight by an O-ring gasket 26, which is arranged in a circumferential groove around the circular-shaped filter element 10. Instead of arranging a O-ring gasket 26 within the gap, it is also possible to make use of other suitable sealing elements like e.g. an elastomeric sealing lip. A flow-through filter medium 27 or, in case of a combined filter element 10, several filter media 27 are arranged between the storage area 3 and the extraction conduit 13, forcing any liquid that is discharged from the storage area 3 through the extraction conduit 13 towards the outlet 15 to flow through the filter medium 27.

Thus, the filter element 10 is easily accessible from outside of the container body 2. A spent filter element 10 can be replaced by removing the filter opening lid 24 from the bottom 23 of the container body 2 and by inserting a new filter element 10 together with a corresponding filter opening lid 24 into the filter opening 22 at the bottom 23 of the container body 2.

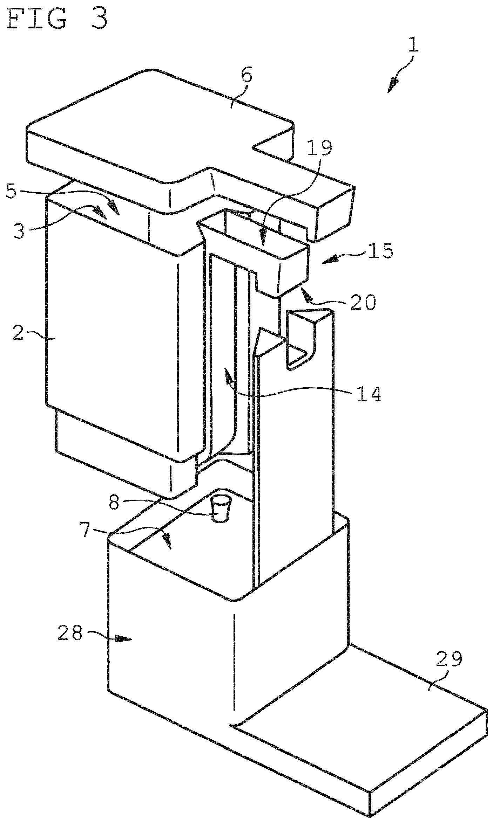

Figure 3 illustrates another embodiment of the filtration device 1 with the container body 2 that is accommodated onto a base part 28. The base part 28 comprises the pressure generating device 7 that is connected via the connecting air tube 8 that leads into the storage area 3 of the container body 2. The lid 6 covers the inlet 5 of the storage area 3 of the container body 2 as well as the duct 19 that connects the output end 18 of the riser pipe 14 with the spout 20 that is directed downward towards a platform 29 at a bottom of the base part 28 for placing a glass or a bottle to be filled with the filtered liquid.

## Claims

1. A filtration device (1) for liquids comprising a container body (2) with a storage area (3) for holding the liquid (4) to be filtered by the filtration device (1), whereby the container body (2) comprises an inlet (5) for filling the liquid (4) into the storage area (3) within the container body (2) and with an outlet (15) that is connected to the storage area (3) via an extraction conduit (13) for extracting the liquid (4) from the storage area (3) through the extraction conduit (13) and out of the outlet (15), whereby the extraction conduit (13) comprises a riser pipe (14) with an input end (17) connected to an output opening of the storage area (3) located at a bottom part of the container body (2) and with an output end (18) located above a maximum filling level of the liquid (4) within the storage area (3) and connected to the outlet (15), whereby the filtration device (1) further comprises a filter element (10) that is arranged inside the container body (2) such that the liquid (4) that is extracted from the container body (2) must pass the filter element (10) before flowing out of the outlet (15), and further comprising a pressure generating device (7) for generating pressure within the container body (2) causing the liquid (4) to pass out of the container body (2) by flowing from the storage area (3) through the extraction conduit (13) and out of the outlet (15), **characterized in that** the container body (2) comprises a seating (11) for removably mounting the filter element (10) to the container body (2), and **in that** the storage area (3), the riser pipe (14) and the outlet (15) are integral parts of the one-piece container body (2).

2. The filtration device (1) according to claim 1, **characterized in that** the inlet (5) of the container body (2) is arranged above the filling level of the storage area (3) and has a cross-sectional area which corresponds to the cross-sectional area of the storage area (3), so that the storage area (3) is accessible without undercuts via the inlet.

3. The filtration device (1) according to claim 1 or claim 2, **characterized in that** the seating (11) for the filter element (10) is only accessible from the storage area (3).

4. The filtration device (1) according to claim 1 or claim 2, **characterized in that** the seating (11) for the filter element (10) is accessible from outside of the container body (2) via a filter opening (22) in the container body (2), whereby the filter opening (22) is sealed liquid-tight with a removable filter opening lid (24), allowing the mounting or removal of the filter element (10) through the filter opening (22).

5. The filtration device (1) according to claim 4, **characterized in that** the filter element (10) is mounted to the filter opening lid (24).

6. The filtration device (1) according to one of the preceding claims, **characterized in that** the output end (18) of the riser pipe (14) is connected via a duct (19) to the laterally spaced outlet (15), whereby the duct (19) is a gutter open at the top.

7. The filtration device (1) according to claim 6, **characterized in that** the outlet (15) comprises a downward pointing spout (20).

8. The filtration device (1) according to one of the preceding claims, **characterized in that** the container body (2) is made of a dishwasher suitable material.

9. The filtration device (1) according to one of the preceding claims, **characterized in that** the filtration device (1) comprises a base part (28) to accommodate the container body (2), whereby the pressure generating device (7) is arranged inside of the base part (28) and pressure-transmitting connected to the storage area (3) if the container body (2) is accommodated on the base part (28).

10. The filtration device (1) according to claim 9, **characterized in that** the pressure generating device (7) is separated by a check valve (9) from the storage area (3) inside the container body (2).
